# EUROPEAN PATENT SPECIFICATION

(11) **EP 4 098 564 B1**
(45) Date of publication and mention of the grant of the patent: **24.09.2025**
(21) Application number: 22176925.0
(22) Date of filing: 02.06.2022
(51) Int. Cl.: B64D 11/06

(54) **RESTING AREA SYSTEMS FOR AN INTERNAL CABIN OF A VEHICLE**
LIEGEBEREICHSYSTEME FÜR DIE INNENKABINE EINES FAHRZEUGS
SYSTÈMES DE ZONE DE REPOS POUR CABINE INTERNE D'UN VÉHICULE

(30) Priority: 04.06.2021 US 202163196722 P
(43) Date of publication of application: 07.12.2022
(73) Proprietor: The Boeing Company, Arlington, VA 22202 (US)
(72) Inventor: MAIR, Roland, CHICAGO, 60606-1596 (US)
(74) Representative: Arnold & Siedsma

(56) References cited:
- EP-A1- 3 904 207
- EP-A2- 0 850 833
- WO-A1-2020/055822
- WO-A1-2020/222193
- DE-A1- 102020 205 485
- US-A- 3 898 704
- US-A1- 2003 057 323
- US-A1- 2011 154 567
- US-B1- 8 888 043
- "Folding-Retractable-Table-Saving", 15 March 2021 (2021-03-15), Retrieved from the Internet <URL:https://www.amazon.de/-/en/RSTJVB-Folding-Retractable-Table-Saving/dp/B08YYB41Z3> [retrieved on 20240422]
- "telescopic-and-rotating-corner-computer-desk-with-folding-bed", 1 March 2021 (2021-03-01), Retrieved from the Internet <URL:https://www.goodideatrade.com/products/telescopic-and-rotating-corner-computer-desk-with-folding-bed/> [retrieved on 20240422]

## Description

### FIELD OF EXAMPLES OF THE DISCLOSURE

Examples of the present disclosure generally relate to resting area systems and methods for an internal cabin of a vehicle, such as a commercial aircraft.

### BACKGROUND OF THE DISCLOSURE

Vehicles such as commercial aircraft are used to transport passengers between various locations. Commercial aircraft typically include an internal cabin that may be divided into numerous sections. A flight deck or cockpit is generally separated from a passenger cabin, which may include a first class section, a business class section, an economy section, and the like.

During a flight of a commercial aircraft, various individuals may desire to recline and rest, particularly during a long haul flight. For example, flight crew personnel including pilots, co-pilots, and attendants may desire (and/or be required by regulations) to rest during a flight that exceeds a predetermined time period.

Certain areas of an internal cabin may include areas for flight crew to rest. For example, a galley within an internal cabin of an aircraft may include one or more deployable seats or other such areas that offer individuals an opportunity to rest. However, such as areas may not afford the individuals the ability to fully recline. Further, such areas may be open areas, which are not able to provide sufficient noise abatement for resting.

Additionally, space within a commercial aircraft is limited. A resting area for crew within a passenger seating area would occupy a space that could otherwise be used for passengers.

The abstract of US 2011/154567 A1 states that a rest arrangement is provided, which comprises a first support element and a lying-down facility. The lying-down facility comprises a first fastening region which in turn comprises a first fastening element and a second fastening element. The lying-down facility is affixed to the support element with the use of the first and the second fastening elements. The lying-down facility is slidable or pivotable between a first state in which the lying-down facility is arranged so as to be essentially horizontal, and a second state, wherein the transition between the first state and the second state takes place as a combined rotational movement and translational movement.

The online retailer Amazon advertised a desk including a collapsible bed that is coupled to the desk which can be extended to form a bed and retracted to be stored away (ASIN: B08YYB41Z3).

### SUMMARY OF THE DISCLOSURE

A need exists for an effective resting area within an internal cabin of an aircraft. Further, a need exists for a resting area within an aircraft that does not encroach upon revenue-generating areas, such as passenger seating areas.

With those needs in mind, an internal cabin of an aircraft according to claim 1 is provided along with a resting area method according to claim 13.

Certain examples of the present disclosure provide a resting area system for an internal cabin of a vehicle. The resting area system includes a monument within the internal cabin. A bed module is coupled to the monument. The bed module includes one or more beds, which are configured to support a flat-lying position of an individual. The bed module is moveable between a stowed position and a deployed position relative to the monument.

In at least one example, the monument includes an interior chamber. At least a portion of the bed module is stowed within the interior chamber when the bed module is in the stowed position. The at least a portion of the bed module extends out of the interior chamber when the bed module is in the deployed position.

As an example, the bed module includes an end wall. In a further example, the end wall includes a handle. In at least one example, the handle includes a graspable member extending within an open cavity formed in the end wall. The open cavity includes an end portion and a lateral portion.

As an example, the end wall includes one or more latches or locks. As an example, the bed module further includes one or more rollers or the like, which provides smooth deployment.

In at least one example, the one or more beds are configured to move between a bed stowed position when the bed module is in the stowed position and a bed deployed position when the bed module is in the deployed position.

In at least one example, the one or more beds include a lower bed, and an upper bed. The resting area system may also include a step configured to allow an individual to climb onto the upper bed.

In at least one example, the one or more beds include a plurality of bed segments. The plurality of bed segments are configured to move relative to one another as the bed module moves between the stowed position and the deployed position. For example, the plurality of bed segments are foldable.

In at least one example, the bed module further includes a deployable pin configured to lock the bed module in the deployed position.

The resting area system may also include one or more moveable privacy screens.

In at least one example, the one or more beds are within one or more bed compartments defined between the monument and the bed module. The one or more bed compartments may include one or more of a speaker, a handset, an area light, a smoke detector a service unit, or an oxygen drop assembly.

In at least one example, the bed module further includes one or more deployable legs moveably secured to a lower surface of the bed module, such as are configured to vertically support the bed module in a deployed position. Optionally, the legs may not be used, and the bed module can be supported by adjacent structure within an internal cabin.

As an example, the bed module is disposed within a galley of the internal cabin proximate to an exit door. In at least one example, the bed module in the deployed position extends into an egress path proximate to the exit door.

Certain examples of the present disclosure provide a resting area method for an internal cabin of a vehicle. The resting area method includes coupling a bed module to a monument within the internal cabin of the vehicle. The bed module includes one or more beds. The method also include moving the bed module between a stowed position and a deployed position relative to the monument.

Certain examples of the present disclosure provide a vehicle, such as an aircraft, including an internal cabin, and a resting area system within the internal cabin, as described herein.

### BRIEF DESCRIPTION OF THE DRAWINGS

Figure 1 illustrates a perspective front view of an aircraft.
Figure 2A illustrates a top plan view of an internal cabin of an aircraft.
Figure 2B illustrates a top plan view of an internal cabin of an aircraft.
Figure 3 illustrates a perspective front view of a resting area system in a stowed configuration.
Figure 4 illustrates a perspective front view of the resting area system in a deployed configuration.
Figure 5 illustrates a perspective front view of the resting area system in an intermediate configuration.
Figure 6 illustrates a perspective front view of the resting area system in the deployed configuration with privacy screens extended.
Figure 7 illustrates a perspective lateral view of the resting area system within a galley or gallery area of an internal cabin.
Figure 8 illustrates a perspective internal view of a bed compartment of the resting area system.
Figure 9 illustrates a perspective internal view of a bed compartment of the resting area system.
Figure 10 illustrates a perspective internal view of the resting area system in the deployed configuration.
Figure 11 illustrates a perspective internal view of the resting area system in the deployed configuration.
Figure 12 illustrates a perspective top view of the resting area system in the stowed configuration within a galley or galley area of an internal cabin of a vehicle.
Figure 13 illustrates a perspective top view of the resting area system in the deployed configuration within the galley of the internal cabin of the vehicle.
Figure 14 illustrates a simplified top plan view of a location for a resting area system within a galley area of an internal cabin.
Figure 15 illustrates a simplified top plan view of locations for resting area systems within an internal cabin.
Figure 16 illustrates a simplified top plan view of a location for a resting area system proximate to a flight deck of an internal cabin.
Figure 17 illustrates a flow chart of a resting area method.

### DETAILED DESCRIPTION OF THE DISCLOSURE

The foregoing summary, as well as the following detailed description of certain examples, will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular property may include additional elements not having that property.

Certain examples of the present disclosure provide a resting area system for an internal cabin of a vehicle, such as a commercial aircraft. The resting area includes a monument and a bed module coupled to the monument. The bed module is configured to be moved between a stowed position and a deployed position relative to the monument. In the deployed position, the bed module provides one or more extended beds that afford an individual an opportunity to lay down and rest. In at least one example, the bed includes one or more segments that are configured to be moved between stowed positions and deployed positions. The bed or segments thereof can include a cushioned surface, such as a mattress.

In at least one example, in which the vehicle is a commercial aircraft, the bed module is in the stowed position during certain phases of aircraft operation. For example, the bed module is in the stowed position during taxi, takeoff, and landing phases of the aircraft operation.

In at least one example, the monument include service features. For example, the service features include one or more of a light, a speaker, a power and/or data receptable, and/or the like.

In at least one example, the bed module includes two beds, such as a lower bed, and an upper bed, thereby providing a bunk configuration. As another example, the bed module includes only a single bed, such as a lower bed, or an upper bed.

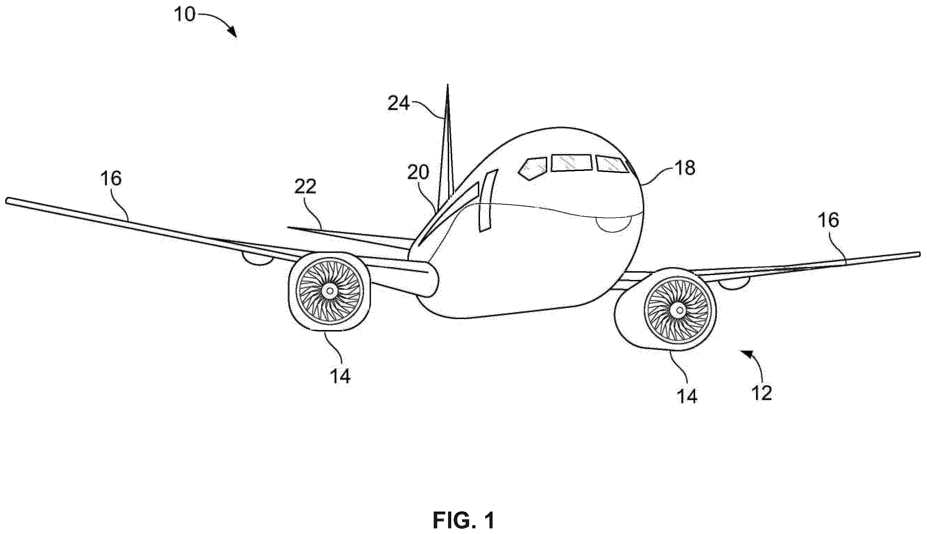

Figure 1 illustrates a perspective top view of an aircraft 10. The aircraft 10 includes a propulsion system 12 that includes two engines 14, for example. Optionally, the propulsion system 12 may include more engines 14 than shown. The engines 14 are carried by wings 16 of the aircraft 10. In other examples, the engines 14 may be carried by a fuselage 18 and/or an empennage 20. The empennage 20 may also support horizontal stabilizers 22 and a vertical stabilizer 24.

The fuselage 18 of the aircraft 10 defines an internal cabin, which may be defined by interior sidewall panels that connect to a ceiling and a floor. The internal cabin includes a flight deck or cockpit, one or more work sections (for example, galleys, personnel carry-on baggage areas, and the like), one or more passenger sections (for example, first class, business class, and economy sections), one or more lavatories, and/or the like.

Alternatively, instead of an aircraft, examples of the present disclosure may be used with various other vehicles, such as automobiles, buses, locomotives and train cars, seacraft, spacecraft, and the like.

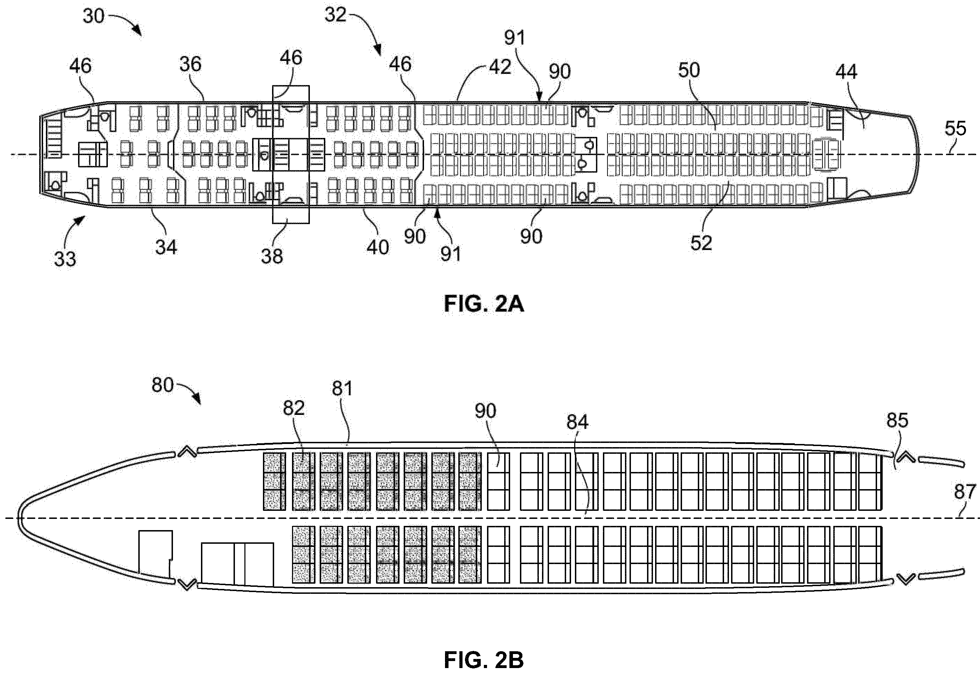

Figure 2A illustrates a top plan view of an internal cabin 30 of an aircraft. The internal cabin 30 may be within a fuselage 32 of the aircraft. For example, one or more fuselage walls may define an interior of the internal cabin 30. The interior of the internal cabin 30 is defined by sidewall panels that connect to a ceiling and a floor. The sidewall panels include lateral segments that connect to ceiling segments. The lateral segments define lateral wall portions, while the ceiling segments define at least portions of the ceiling within the internal cabin 30.

The internal cabin 30 includes multiple sections, including a front section 33, a first class section 34, a business class section 36, a front galley station 38, an expanded economy or coach section 40, a standard economy or coach section 42, and an aft section 44, which may include multiple lavatories and galley stations. It is to be understood that the internal cabin 30 may include more or less sections than shown. For example, the internal cabin 30 may not include a first class section, and may include more or less galley stations than shown. Each of the sections may be separated by a cabin transition area 46. In at least one example, one or more resting area systems are disposed within the internal cabin 30.

As shown in Figure 2A, the internal cabin 30 includes two aisles 50 and 52 that lead to the aft section 44. Optionally, the internal cabin 30 may have less or more aisles than shown. For example, the internal cabin 30 may include a single aisle that extends through the center of the internal cabin 30 that leads to the aft section 44.

Seat assemblies 90 are positioned throughout the internal cabin 30. The seat assemblies 90 may be arranged in rows 91. The seat assemblies 90 are installed within the internal cabin 30.

Figure 2B illustrates a top plan view of an internal cabin 80 of an aircraft. The internal cabin 80 may be within a fuselage 81 of the aircraft. For example, one or more fuselage walls may define the interior of the internal cabin 80. The internal cabin 80 includes multiple sections, including a main cabin 82 having seat assemblies 90, and an aft section 85 behind the main cabin 82. In at least one example, one or more resting area systems are disposed within the internal cabin 80. It is to be understood that the internal cabin 80 may include more or less sections than shown.

The internal cabin 80 may include a single (main) aisle 84 that leads to the aft section 85. The single aisle 84 may extend through the center of the internal cabin 80 that leads to the aft section 85. For example, the single aisle 84 may be coaxially aligned with a central longitudinal plane 87 of the internal cabin 80.

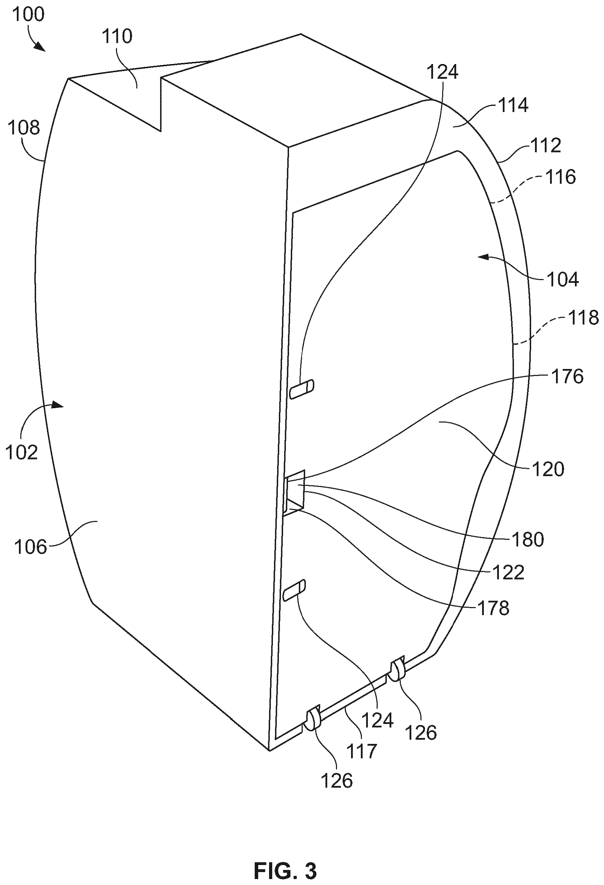

Figure 3 illustrates a perspective front view of a resting area system 100 in a stowed configuration, according to an example of the present disclosure. The resting area system 100 is configured to be disposed within an internal cabin of a vehicle, such as a commercial aircraft. For example, the resting area system 100 is configured to be disposed within the internal cabin 30 of Figure 2A or the internal cabin 80 of Figure 2B.

In at least one example, the resting area system 100 is sized and shaped to be disposed within the internal cabin of the vehicle, such as a commercial aircraft. The resting area system 100 is disposed within the internal cabin, such as out of a passenger seating area. In at least one example, the resting area system 100 is specifically configured to fit within the confined space of a vehicle, such as a commercial aircraft, without encroaching into revenue-generating portions of the vehicle (such as passenger seating areas), while also fitting within the specific shaped envelope of the internal cabin (as defined by a fuselage of the aircraft, for example).

The resting area system 100 includes a monument 102 and a bed module 104 coupled to the monument 102. The bed module 104 is configured to move between a stowed position (as shown in Figure 3) and a deployed position in relation to the monument 102. The monument 102 includes an inboard wall 106 coupled to an end wall 108, and a ceiling 110. The end wall 108 and the ceiling 110 are, in turn, coupled to an outboard wall 112. The inboard wall 106, the ceiling 110, and the outboard wall 112 may be coupled to an end frame 114, which is opposite from the end wall 108. The end frame 114 defines a passage 116 into which the bed module 104 passes. In at least one example, the inboard wall 106, the end wall 108, the outboard wall 112, and the end frame 114 are coupled to a lower base 117. Optionally, the wall 106 may be an outboard wall, and the wall 112 may be an inboard wall.

As used herein, the term "outboard" means a position that is further away from a central longitudinal plane of an internal cabin (such as the central longitudinal plane 55 shown in Figure 2A or the central longitudinal plane 87 of Figure 2B) as compared to another component. The term "inboard" means a position that is closer to the central longitudinal plane of the internal cabin as compared to another component.

As shown, the monument 102 can include the inboard wall 106, the end wall 108, the ceiling 110, the outboard wall 112, the end frame 114, and the lower base 117. Optionally, portions of the monument 102 may be formed by portions of an internal cabin. For example, the end wall 108 may be a front or end wall within an internal cabin. As another example, outboard wall 112 may be a portion of a side wall of the internal cabin. As another example, the lower base 117 may be a portion of a floor within the internal cabin. As another example, the ceiling 110 may be a portion of a ceiling within the internal cabin.

An interior chamber 118 is defined between the inboard wall 106, the end wall 108, the ceiling, the outboard wall, the end frame 114, and the lower base 117. The passage 116 leads into the interior chamber 118. At least a portion of the bed module 104 is stowed within the interior chamber 118 when the bed module 104 is in the stowed position. In at least one example, in the stowed position, no portion of the bed module may outwardly extend from the interior chamber 118. In the deployed position, the portions of the bed module extend out of the interior chamber 118.

The bed module 104 includes an end wall 120 that fits within the passage 116, and/or is recessed into the interior chamber 118 when the bed module 104 is in the stowed position. The end wall 120 can be a flat panel, for example.

In at least one example, the end wall 120 includes a handle 122 that is configured to be grasped by an individual. As shown, the handle 122 can be proximate to the inboard wall 106. Additionally, one or more locks or latches 124 are disposed on and/or within the end wall 120. The locks or latches 124 are configured to cooperate with reciprocal structures of the inboard wall 106 to maintain the bed module 104 in the stowed position (so as to ensure the bed module 104 does not inadvertently deploy, such as during taxiing, takeoff, and/or landing of an aircraft). The locks or latches 124 are selectively moveable between secured and unsecured positions. In the secured positions, the locks or latches 124 maintain the bed module 104 in the stowed position. When the locks or latches 124 are unsecured, the bed module 104 may be moved out of the interior chamber 118 into a deployed position. The end wall 120 can include more or less locks or latches 124 than shown. For example, the end wall 120 can include one lock 124. Alternatively, the end wall 120 may not include any locks or latches.

As shown, the bed module 104 can also include one or more rollers, skids, or other such mechanisms 126, such as wheels or casters. The rollers 126 can be moveably secured to a lower edge of the end wall 120. The rollers 126 are configured to allow the bed module 104 to smoothly move between the stowed position and the deployed position. Optionally, the bed module 104 may not include the rollers 126.

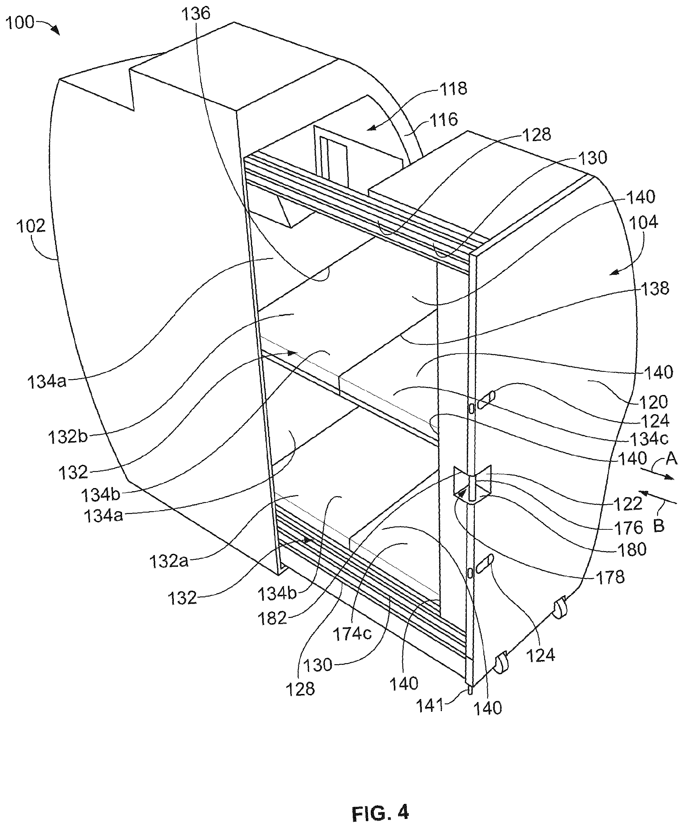

Figure 4 illustrates a perspective front view of the resting area system 100 in a deployed configuration, according to an example of the present disclosure. In the deployed configuration, the bed module 104 is in a deployed position. The bed module 104 includes one or more extension beams 128 coupled to the end wall 120. The extension beams 128 can include one or more tracks 130 that are configured to cooperate with reciprocal members (such as tracks, guides, ledges, ridges, and/or the like) of the monument 102. In at least one example, the extension beams 128 are configured to fold, collapse, telescope, and/or the like with respect to the reciprocal members of the monument 102. In at least one other example, the extension beams 128 are fixed beams that slide into and out of the monument 102, such as with respect to the reciprocal members.

The bed module 104 includes one or more beds 132 that are configured to be moved between bed stowed positions (such as when the bed module 104 is in the stowed position, as shown in Figure 3) and bed deployed positions (such as when the bed module 104 is in the deployed position, as shown in Figure 4). As shown in Figure 4, the bed module 104 includes a lower bed 132a and an upper bed 132b over the lower bed 132a. As such, the lower bed 132a and the upper bed 132b provide a bunk configuration. Optionally, the bed module 104 can include only the lower bed 132a. In at least one other example, the bed module 104 can include only the upper bed 132b.

Each bed 132 includes a plurality of bed segments. For example, the beds 132 can include a first end bed segment 134a, an intermediate bed segment 134b, and a second end bed segment 134c, which is opposite from the first end bed segment 134a. One or more of the bed segments 134a, 134b, and/or 134c is configured to move in relation to the other bed segments 134a, 134b, and/or 134c. For example, the bed segments 134a, 134b, and 134c are foldable (for example, configured to fold and/or collapse in relation to one another). As another example, the bed segments 134a, 134b, and 134c are configured to slide over and/or under one another. As another example, the bed segments 134a, 134b, and 134c are configured to telescope in relation to one another.

As an example, the first end bed segment 134a is secured to the monument 102 within the interior chamber 118. For example, the first end bed segment 134a can be fixed to interior surfaces of the monument 102. The intermediate bed segment 134b is foldable with respect to the first end bed segment 134a. For example, the intermediate bed segment 134b is coupled to the first end bed segment 134a at a first hinge 136. The intermediate bed segment 134b is also foldable with respect to the second end bed segment 134c. For example, the intermediate bed segment 134b is coupled to the second end bed segment 134a at a second hinge 138. An opposite end 141 of the second end bed segment 134c is secured to an interior surface of the end wall 120. Portions of the first end bed segment 134a, the intermediate bed segment 134b, and the second end bed segment 134c may be coupled to tracks, rails, or the like of the monument 102 and/or the extension beams 128 to ensure smooth and consistent movement between the bed stowed position and the bed deployed position.

As shown in Figure 4, the beds 132 are in the bed deployed positions, such that the first end bed segment 134a, the intermediate bed segment 134b, and the second end bed segment 134c are fully extended into a flat position. As such, an individual may comfortably rest on the beds 132 in the bed deployed positions.

Referring to Figures 3 and 4, in order to move the bed module 104 into the deployed position from the stowed position, an individual unlocks the locks or latches 124, grasps the handle 122, and pulls the bed module 104 out of the interior chamber 118 of the monument 102 in the direction of arrow A. In order to move the bed module 104 back into the stowed position from the deployed position, the individual grasps the handle 122 and pulls (or otherwise pushes the end wall 120) in the direction of arrow B to stow the bed module 104 back into the interior chamber 118. As the bed module 104 moves from the stowed position to the deployed position, the beds 132 move accordingly, such as by the bed segments 134a, 134b, and 134c unfolding into an extended position. As the bed module 104 moves from the deployed position to the stowed position, the beds 132 move accordingly, such as by the bed segments 134a, 134b, and 134c collapsing or folding back into retracted configurations.

As described herein, the beds 132 include a plurality of bed segments that are configured to move in relation to one another between a bed stowed position and a bed deployed position. As shown in Figure 4, the beds 132 include three segments. In particular, the beds 132 include the first end bed segment 134a, the intermediate bed segment 134b, and the second end bed segment 134c. Optionally, the beds 132 can include more or less bed segments than shown. For example, the beds 132 can include two bed segments that are configured to move in relation to one another between the bed stowed position and the bed deployed position. As another example, the beds 132 can include four or more bed segments that are configured to move in relation to one another between bed stowed position and the bed deployed position.

Each bed 132 can also include a cushioned surface 140, such as a mattress or portion thereof. For example, the bed segments 134a, 134b, and 134c can include cushioned surfaces 140.

In at least one example, a deployable pin 141 can be used to lock the bed module 104 in the deployed position. For example, the deployable pin 141 can be received and retained within a reciprocal recess in the floor of the internal cabin. As another example, the bed module 104 can be locked in the deployed position through a chain, latch, or the like that connects to another structure within the internal cabin. As another example, the bed module 104 can be locked into the deployed position through an internal mechanism within the extension beams 128 or track 130.

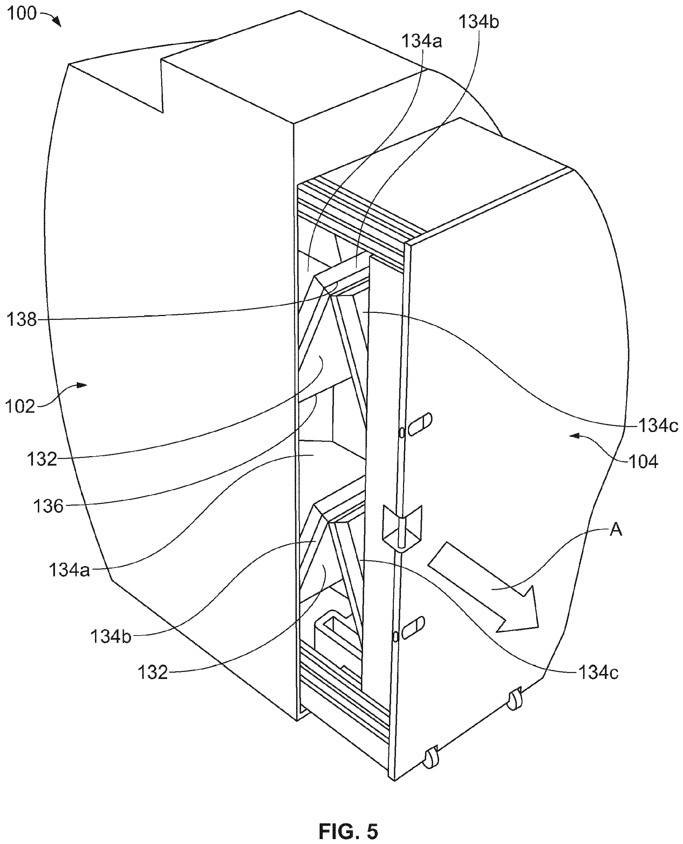

Figure 5 illustrates a perspective front view of the resting area system 100 in an intermediate configuration, according to an example of the present disclosure. The intermediate configuration is between the stowed configuration and the deployed configuration. As shown, in at least one example, the bed segments 134a, 134b, and 134c are configured to move in relation to one another between the bed stowed position and the bed deployed position by folding, such as about the first hinge 136 and the second hinge 138. In at least one other example, the bed segments 134a, 134b, and 134c are configured to move in relation to another by sliding over or under each other, telescoping in relation to another, pivoting upwardly or downwardly, and/or the like.

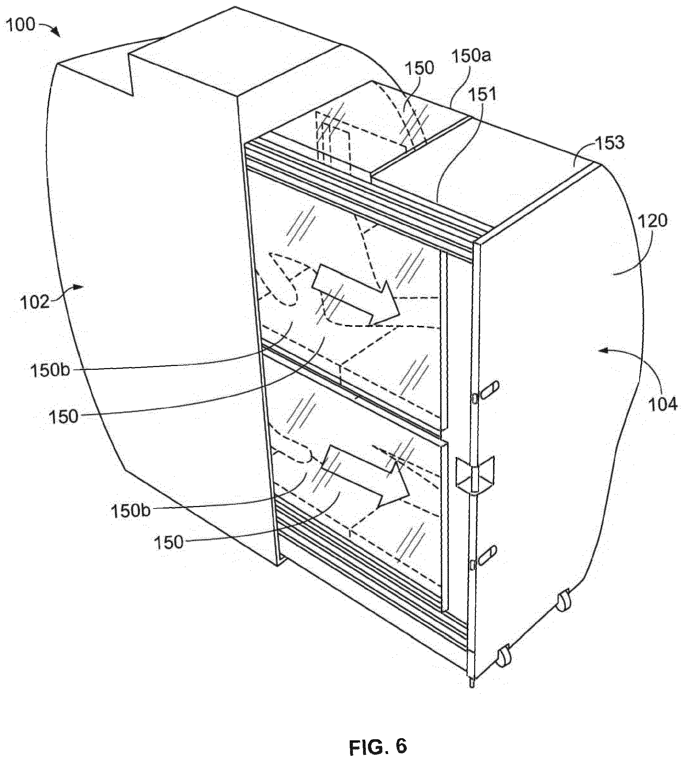

Figure 6 illustrates a perspective front view of the resting area system 100 in the deployed configuration with privacy screens 150 extended, according to an example of the present disclosure. The resting area system 100 can include one or more privacy screens 150 that are moveably secured to tracks of one or both of the monument 102 and/or the bed module 104. For example, an upper privacy screen 150a is moveably coupled to tracks 151 of an upper wall 153 that connects to the end wall 120. The upper privacy screen 150a is configured to be moved over an open upper portion, so as to block light and noise from passing therethrough. As another example, lateral privacy screens 150b are movably coupled to tracks of the monument 102. The lateral privacy screens 150b are configured to be moved over an open lateral portion, so as to block light and noise from passing therethrough.

In at least one example, the privacy screens 150 are solid panels, which may or may not include sound dampening insulation, for example. The panels can be transparent, shaded, or opaque. As another example, the privacy screens 150 can be mesh panels. As another example, the privacy screens 150 can be drapes or curtains. Optionally, the resting area system 100 may include more or less privacy screens 150 than shown. As another example, the resting area system 100 may not include any privacy screens.

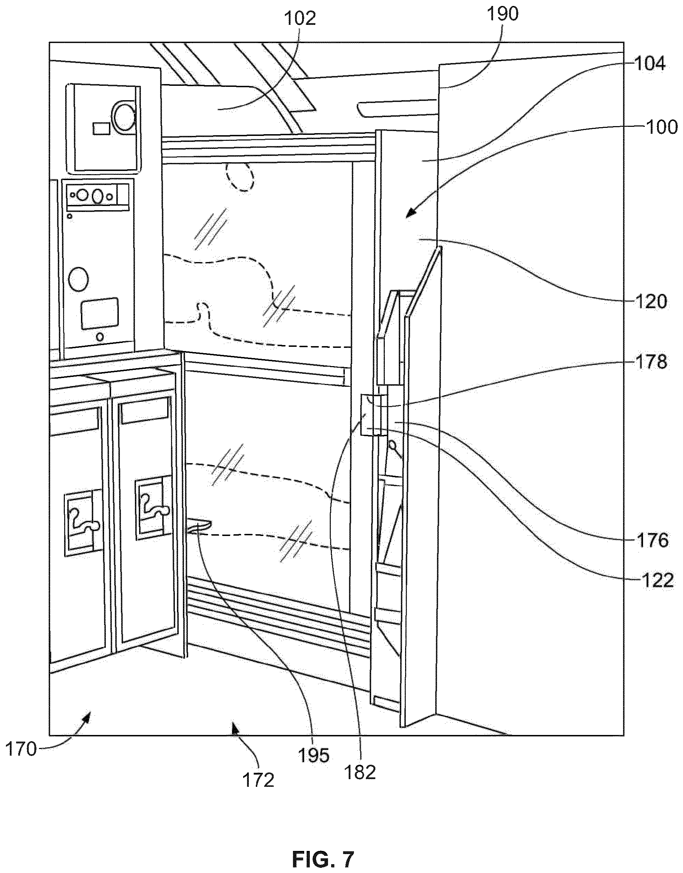

Figure 7 illustrates a perspective lateral view of the resting area system 100 within a galley 170 of an internal cabin 172, according to an example of the present disclosure. As shown in Figure 7, the resting area system 100 is in the deployed configuration. Referring to Figures 3, 4, and 7, the handle 122 includes a graspable member 176, such as a post, column, or the like. The graspable member 176 extends within an open cavity 178 formed in the end wall 120. The open cavity 178 includes an end portion 180 and a lateral portion 182. In this manner, when the bed module 104 is in the stowed position (as shown in Figure 3), an individual can easily grasp the graspable member 176 through the end portion 180 of the open cavity 178, despite the lateral portion 182 being covered by the inboard wall 106 of the monument 102. Similarly, if the bed module 104 is in the deployed position (as shown in Figures 4 and 7) and the end wall 120 abuts against or is otherwise proximate to a wall 190 or other proximate structure within the internal cabin 172, the individual can easily grasp the graspable member 176 through the lateral portion 182 of the open cavity 178, despite the end portion 182 being proximate to the wall 190.

A step 195 can be used by an individual to climb into an upper bed compartment. The step 195 may be secured to structure proximate to the resting area system 100, such as a galley cart compartment. As another example, the step 195 can be secured to the monument 102. As another example, the step 195 can be secured to the bed module 104. The step 195 can be fixed in position. As another example, the step 195 can be moveable (such as pivoted) between a recessed or stowed position, and an extended or stepping position.

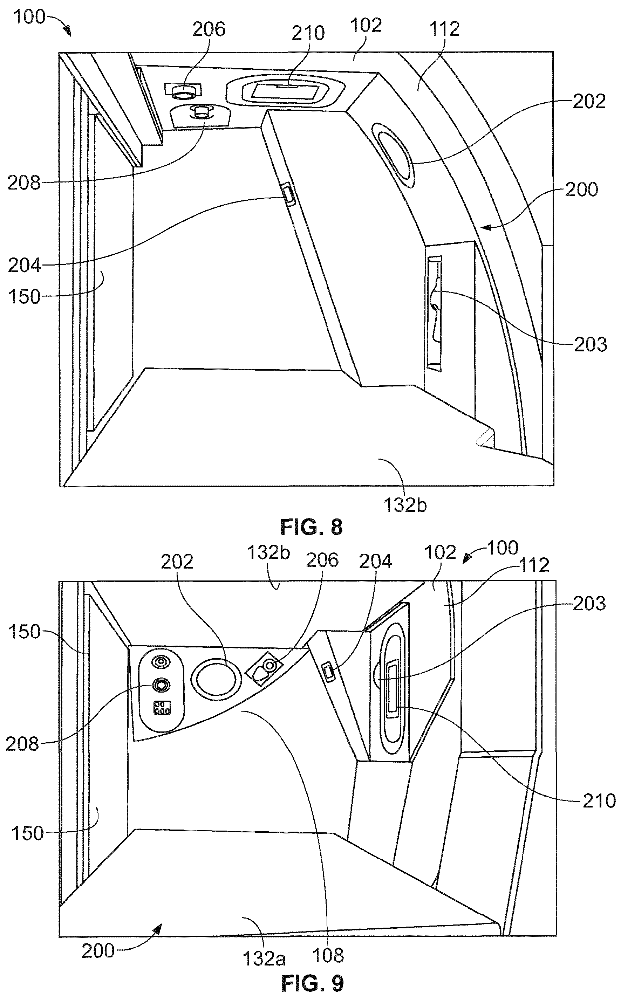

Figure 8 illustrates a perspective internal view of a bed compartment 200 of the resting area system 100, according to an example of the present disclosure. The bed compartment 200 may be an upper bunk compartment having the upper bed 132b as a support surface for an individual. The bed compartment 200 can include a speaker 202 secured to an interior surface of the outboard wall 112 of the monument 102. The bed compartment 200 can also include a handset 203, such as a phone, secured to the interior surface of the outboard wall 112. As another example, an area light 204 can be secured to an interior surface of the monument 102. As another example, a smoke detector 206 can be secured to an interior surface of the ceiling 110 of the monument 102. As another example, a service unit 208 can be secured to the ceiling 110. The service unit 208 can include one or more lights, ventilation devices, and/or the like. An oxygen drop assembly 210 can also be secured to the ceiling 110. As also shown, the privacy screen 150 is recessed into the monument 102, such as secured to tracks, in a recessed position. The bed compartment 200 can include more or less components than shown. For example, the bed compartment 200 can include less than all of the speaker 202, the handset 203, the area light 204, the smoker detector 206, the service unit 208, the oxygen drop assembly 210, and/or the like.

Figure 9 illustrates a perspective internal view of a bed compartment 200 of the resting area system 100, according to an example of the present disclosure. The bed compartment 200 may be a lower bunk compartment having the lower bed 132a as a support surface for an individual. The bed compartment 200 can include a speaker 202 secured to an interior surface of the end wall 108 of the monument 102. The bed compartment 200 can also include a handset 203, such as a phone, secured to the interior surface of the outboard wall 112. As another example, an area light 204 can be secured to an interior surface of the monument 102. As another example, a smoke detector 206 can be secured to an interior surface of the end wall 108 of the monument 102. As another example, a service unit 208 can be secured to the end wall 108. An oxygen drop assembly 210 can also be secured to the outboard wall 112. As also shown, the privacy screen 150 is recessed into the monument 102, such as secured to tracks, in a recessed position. The bed compartment 200 can include more or less components than shown. For example, the bed compartment 200 can include less than all of the speaker 202, the handset 203, the area light 204, the smoker detector 206, the service unit 208, the oxygen drop assembly 210, and/or the like.

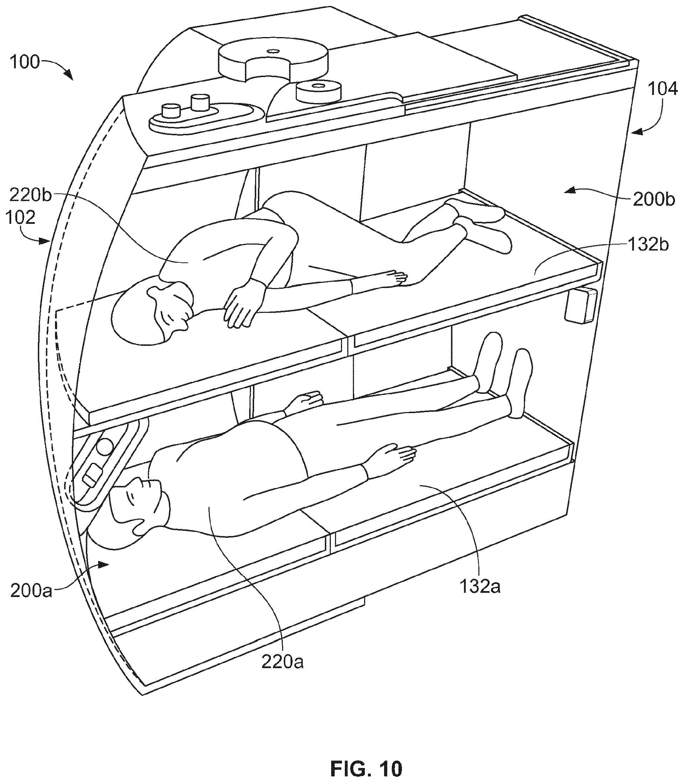

Figure 10 illustrates a perspective internal view of the resting area system 100 in the deployed configuration, according to an example of the present disclosure. As shown, a first individual 220a is supported and resting on the lower bed 132a within the lower bed compartment 200a, and a second individual 220b is supported and resting on the upper bed 132b within the upper bed compartment 200b.

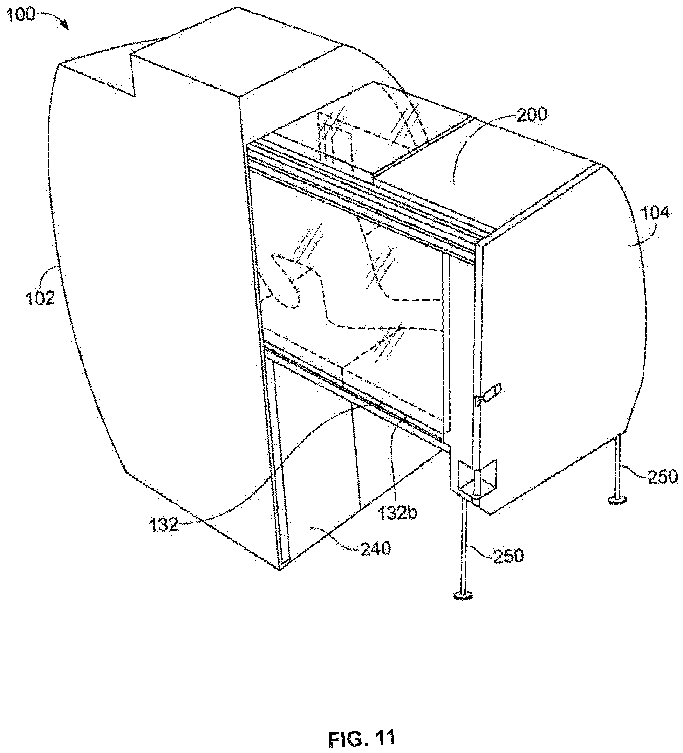

Figure 11 illustrates a perspective internal view of the resting area system 100 in the deployed configuration, according to an example of the present disclosure. In this example, the bed module 104 includes only one bed 132, such as the upper bed 134, which defines a bed compartment 200. The bed module 104 is positioned above another structure, such as one or more galley compartments 240 for galley carts. In this manner, the bed module 104 can be used in conjunction with other structures within an internal cabin, without occupying space that can be used for other purposes, such as galley carts.

One or more deployable legs 250 may be moveably secured to a lower portion of the bed module 104. The legs 250 can be pivoted between stowed position, in which they are generally parallel with the bed 132 (as extended and shown in Figure 11), and a deployed position, in which they are generally perpendicular to the bed 132 (as extended and shown in Figure 11). When the legs 250 are in the deployed positions, the legs provide a bracing support between the bed module 104 and a floor of the internal cabin. Optionally, the legs may not be used, and the bed module 104 can attached to or be supported by adjacent structure within the internal cabin.

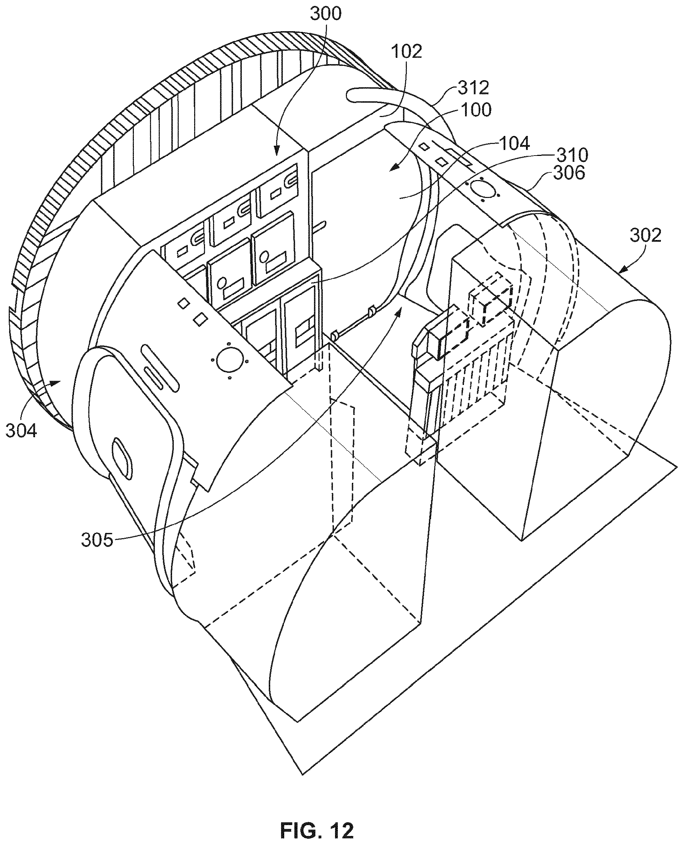

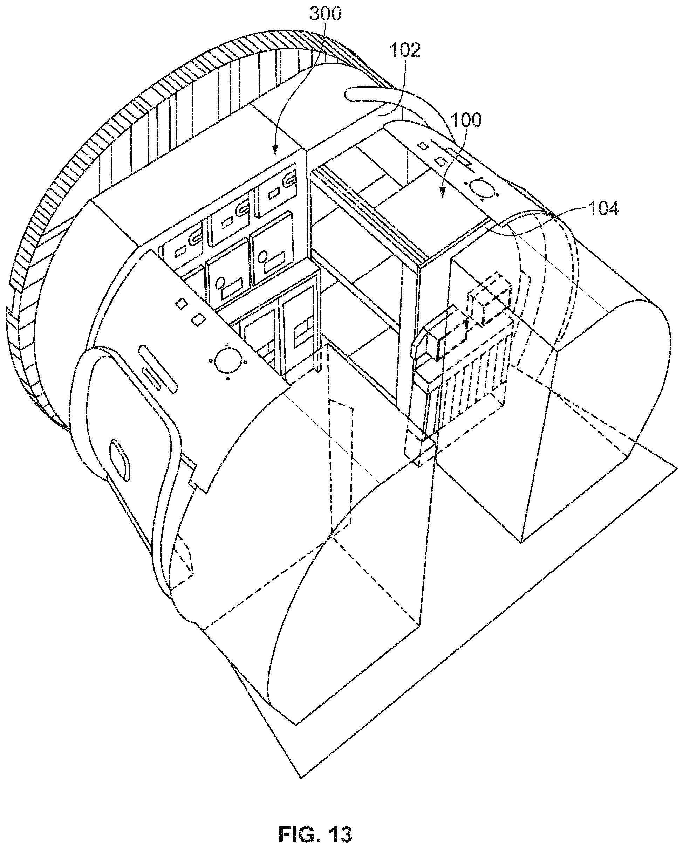

Figure 12 illustrates a perspective top view of the resting area system 100 in the stowed configuration within a galley 300 of an internal cabin 302 of a vehicle 304 (such as a commercial aircraft), according to an example of the present disclosure. Figure 13 illustrates a perspective top view of the resting area system 100 in the deployed configuration within the galley 300 of the internal cabin 302 of the vehicle 304. Referring to Figures 12 and 13, the resting area system 100 can be disposed within or adjacent to the galley 300, such as at an aft section of the internal cabin 302. In the stowed configuration, the bed module 104 is aft of an egress path 305 by an exit door 306. In the stowed configuration, the bed module 104 does not extend into the egress path 305. In the deployed configuration, the bed module 104 extends into the egress path 305.

The resting area system 100 is secured in the stowed position during certain phases of a flight of the aircraft. For example, the resting area system 100 is in the stowed position during taxi, takeoff, and landing phases.

As shown, the resting area system 100 can be disposed between galley components, such as galley carts 310, and an outboard wall 312 of the internal cabin 302. Optionally, the resting area system 100 can be disposed at other areas, such as an opposite side, of the galley 300. Additionally, the resting area system 100 can be disposed at other areas of the internal cabin 302 other than the galley 300. For example, the resting area system 100 can be disposed proximate to a flight deck, a lavatory, or the like.

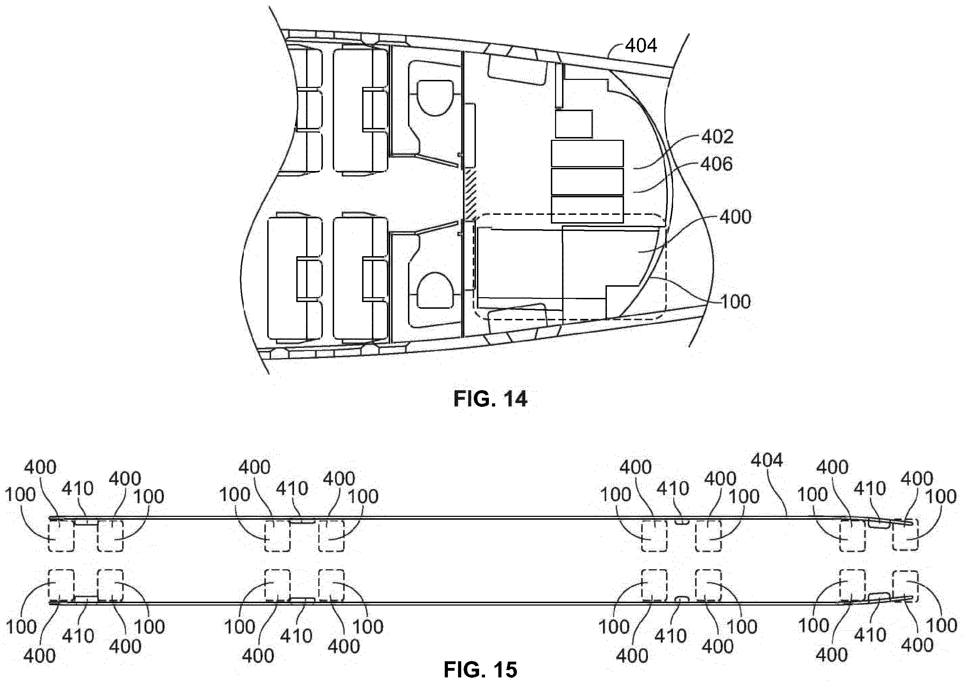

Figure 14 illustrates a simplified top plan view of a location 400 for a resting area system 100 within a galley 402 of an internal cabin 404, according to an example of the present disclosure. As noted, the resting area system 100 can be disposed to a side of galley one or more components 406.

Figure 15 illustrates a simplified top plan view of locations 400 for resting area systems 100 within an internal cabin 404, according to an example of the present disclosure. The resting area systems 100 can be located at various locations, such as by or within galleys, by lavatories, and/or the like. The internal cabin 404 can include multiple resting area system 100, or just one resting area system 100. The resting area system 100 can be located proximate to exit doors 410.

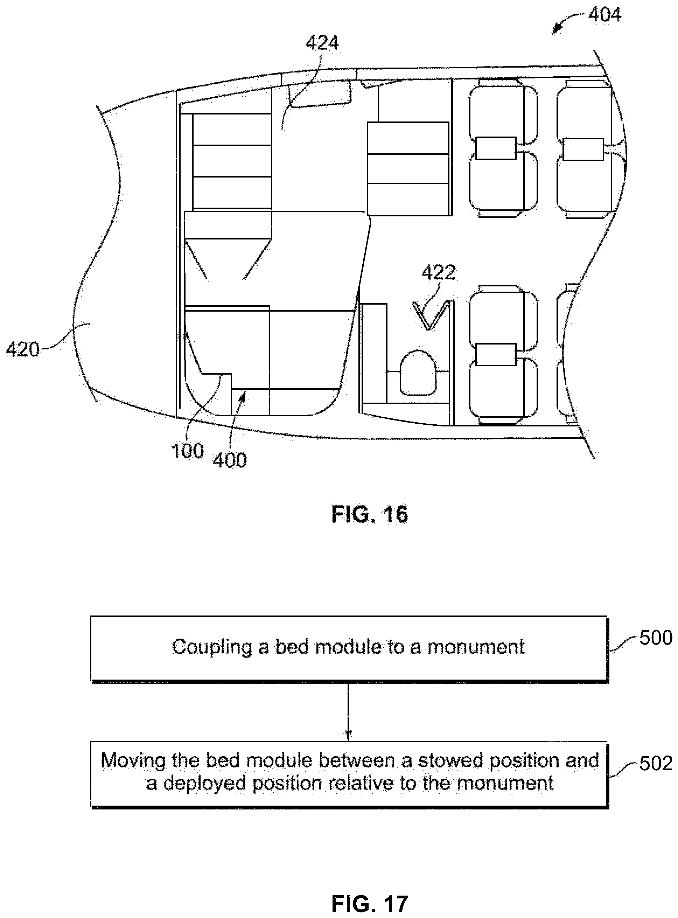

Figure 16 illustrates a simplified top plan view of a location 400 for a resting area system 100 proximate to a flight deck 420 of the internal cabin 404, according to an example of the present disclosure. The resting area system 100 can be directly behind the flight deck 420, and thereby provide quick and easy access for a flight crew. The resting area system 100 can be disposed between the flight deck 420 and a lavatory 422 or other structure. The resting area system 100 can be disposed to a side of a front galley 424.

Referring to Figures 14-16, the resting area system(s) 100 can be disposed at various locations 400 of the internal cabin 404. Figures 14-16 show examples of such locations 400.

Figure 17 illustrates a flow chart of a resting area method for an internal cabin of a vehicle, according to an example of the present disclosure. Referring to Figures 1-17, the resting area method includes coupling, at 500, a bed module 104 to a monument 102. The bed module 104 includes one or more beds 132. The resting area method also includes moving, at 502, the bed module 104 between a stowed position and a deployed position relative to the monument 102.

In at least one example, said moving 502 includes stowing at least a portion of the bed module 104 within the interior chamber 118 of the monument 102 when the bed module 104 is in the stowed position; and extending the at least a portion of the bed module 104 out of the interior chamber 118 when the bed module 104 is in the deployed position.

In at least one example, the resting area method also includes moving the one or more beds 132 between a bed stowed position when the bed module 104 is in the stowed position and a bed deployed position when the bed module 104 is in the deployed position.

As described herein, examples of the present disclosure provide resting area systems within an internal cabin of a vehicle, such as a commercial aircraft. The bed modules in the deployed positions provide a rest facility that provides one or more beds that allow for flat sleeping positions, and which may be separate from the flight deck and the passenger seating area. The bed modules allow flight crew personnel (such as pilots, co-pilots, and flight attendants) to control light, and provides isolation from noise and disturbance. Flight crew personnel may opt to rest within the resting area system, such as during long haul flights (such as flights over 8 hours). Well-rested flight crew personnel promote optimal passenger service, aircraft operational safety, and operator schedule efficiency.

The resting area system may not be within passenger seating areas, and may therefore not impact seating density within a commercial aircraft. As such, the resting area system does not adversely affect revenue generating portions of the aircraft.

Further, the disclosure comprises the following illustrative examples that do not define the scope of protection but are useful for understanding the claimed invention which is set out in the appended claims.

In a first illustrative example, a resting area system for an internal cabin of a vehicle is provided, the resting area system comprising:
a monument within the internal cabin; and
a bed module coupled to the monument, the bed module including one or more beds,
wherein the bed module is moveable between a stowed position and a deployed position relative to the monument.

The monument may include an interior chamber, wherein at least a portion of the bed module is stowed within the interior chamber when the bed module is in the stowed position, and wherein the at least a portion of the bed module extends out of the interior chamber when the bed module is in the deployed position.

The bed module may comprise an end wall.

The end wall may comprise a handle, preferably wherein:
the handle comprises a graspable member extending within an open cavity formed in the end wall, wherein the open cavity comprises an end portion and a lateral portion.

The end wall may comprise one or more locks.

The bed module may further comprise one or more rollers.

The one or more beds may be configured to move between a bed stowed position when the bed module is in the stowed position and a bed deployed position when the bed module is in the deployed position.

The one or more beds may comprise:
a lower bed; and
an upper bed, and preferably further comprising:
   a step configured to allow an individual to climb onto the upper bed.

The one or more beds may comprise a plurality of bed segments, wherein the plurality of bed segments are configured to move relative to one another as the bed module moves between the stowed position and the deployed position, preferably wherein:
the plurality of bed segments are foldable.

The bed module may further comprise a deployable pin configured to lock the bed module in the deployed position.

The resting area system may further comprise one or more moveable privacy screens.

The one or more beds may be within one or more bed compartments defined between the monument and the bed module, wherein the one or more bed compartments comprise one or more of a speaker, a handset, an area light, a smoke detector a service unit, or an oxygen drop assembly.

The bed module may further comprise one or more deployable legs moveably secured to a lower surface of the bed module.

The bed module may be disposed within a galley of the internal cabin proximate to an exit door.

In a second illustrative example, a resting area method for an internal cabin of a vehicle is provided, the resting area method comprising:
coupling a bed module to a monument within the internal cabin of the vehicle, the bed module including one or more beds; and
moving the bed module between a stowed position and a deployed position relative to the monument.

Said moving may comprise:
stowing at least a portion of the bed module within an interior chamber of the monument when the bed module is in the stowed position; and
extending the at least a portion of the bed module out of the interior chamber when the bed module is in the deployed position.

The resting area method may further comprise moving the one or more beds between a bed stowed position when the bed module is in the stowed position and a bed deployed position when the bed module is in the deployed position.

In a third illustrative example, an aircraft comprises:
an internal cabin; and
a resting area system within the internal cabin, the resting area system comprising:
   a monument including an interior chamber;
   a bed module coupled to the monument, the bed module including one or more beds; and
   one or more moveable privacy screens coupled to one or both of the monument of the bed module,
   wherein the bed module is moveable between a stowed position and a deployed position relative to the monument,
   wherein the one or more beds are configured to move between a bed stowed position when the bed module is in the stowed position and a bed deployed position when the bed module is in the deployed position,
   wherein at least a portion of the bed module is stowed within the interior chamber when the bed module is in the stowed position, and wherein the at least a portion of the bed module extends out of the interior chamber when the bed module is in the deployed position, and
   wherein the one or more beds comprise a plurality of bed segments, wherein the plurality of bed segments are configured to move relative to one another as the bed module moves between the stowed position and the deployed position.

As described herein, examples of the present disclosure provide an effective resting area within an internal cabin of an aircraft. Further, examples of the present disclosure provide a resting area within an aircraft that does not encroach upon revenue-generating areas, such as passenger seating areas.

While various spatial and directional terms, such as top, bottom, lower, mid, lateral, horizontal, vertical, front and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) may be used in combination with each other. In addition, many modifications may be made to adapt a particular situation or material to the teachings of the various examples of the disclosure without departing from their scope. While the dimensions and types of materials described herein are intended to define the parameters of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects. This written description uses examples to disclose the various examples of the disclosure, including the best mode, and also to enable any person skilled in the art to practice the various examples of the disclosure, including making and using any devices or systems and performing any incorporated methods.

## Claims

1. An internal cabin (172) of an aircraft (10), comprising a resting area system (100), the resting area system (100) comprising:
a monument (102) within the internal cabin (172); and
a bed module (104) coupled to the monument (102), the bed module (104) including an end wall (120) and one or more beds (132),
wherein the end wall (120) of the bed module (104) is configured to be linearly moved in relation to the monument (102) to move the bed module (104) between a stowed position and a deployed position relative to the monument (102), and
wherein the bed module (104) further comprises a deployable pin (141) configured to lock the bed module (104) in the deployed position.

2. The internal cabin (172) of claim 1, wherein the monument (102) includes an interior chamber (118), wherein at least a portion of the bed module (104) is stowed within the interior chamber (118) when the bed module (104) is in the stowed position, and wherein the at least a portion of the bed module (104) extends out of the interior chamber (118) when the bed module (104) is in the deployed position.

3. The internal cabin (172) of any of claims 1-2, wherein the end wall (108, 120) fits or is recessed within a passage of the monument (102) when the bed module (104) is in the stowed position..

4. The internal cabin (172) of any of the preceding claims, wherein the end wall (108, 120) comprises one or more locks (124), and/or wherein the end wall (120) comprises a handle, preferably wherein the handle comprises a graspable member extending within an open cavity formed in the end wall, wherein the open cavity comprises an end portion and a lateral portion.

5. The internal cabin (172) of any of claims 1-4, wherein the bed module (104) further comprises one or more rollers (126).

6. The internal cabin (172) of any of claims 1-5, wherein the one or more beds (132) are configured to move between a bed stowed position when the bed module (104) is in the stowed position and a bed deployed position when the bed module (104) is in the deployed position.

7. The internal cabin (172) of any of claims 1-6, wherein the one or more beds (132) comprise:
a lower bed; and
an upper bed.

8. The internal cabin (172) of any of claims 1-7, wherein the one or more beds (132) comprise a plurality of bed segments, wherein the plurality of bed segments are configured to move relative to one another as the bed module (104) moves between the stowed position and the deployed position.

9. The internal cabin (172) of any of claims 1-8, further comprising a reciprocal recess in a floor of the internal cabin (172), wherein the deployable pin (141) can be received and retained within the reciprocal recess.

10. The internal cabin (172) of any of claims 1-9, further comprising one or more moveable privacy screens (150).

11. The internal cabin (172) of any of claims 1-10, wherein the one or more beds (132) are within one or more bed compartments (200) defined between the monument (102) and the bed module (104), and wherein the one or more bed compartments (200) comprise one or more of a speaker (202), a handset (203), an area light (204), a smoke detector (206) a service unit (208), or an oxygen drop assembly (210).

12. The internal cabin (172) of any of claims 1-11, wherein the bed module (104) is disposable within a galley (170) of the internal cabin (172) proximate to an exit door.

13. A resting area method for an internal cabin (172) of an aircraft according to any one of claims 1-12, the resting area method comprising:
coupling the bed module (104) to the monument (102) within the internal cabin (172) of the aircraft, the bed module (104) including the one or more beds (132);
moving the bed module (104) between the stowed position and the deployed position relative to the monument (102), wherein the moving comprises linearly moving the end wall (120) of the bed module (104) in relation to the monument; and
locking the bed module (104) in the deployed position by means of the deployable pin (141).

14. The resting area method of claim 13, wherein said moving comprises:
stowing at least a portion of the bed module (104) within an interior chamber (118) of the monument (102) when the bed module (104) is in the stowed position; and
extending the at least a portion of the bed module (104) out of the interior chamber (118) when the bed module (104) is in the deployed position.

15. The resting area method of any of claims 13 or 14, further comprising moving the one or more beds (132) between a bed stowed position when the bed module (104) is in the stowed position and a bed deployed position when the bed module (104) is in the deployed position.

## Patentansprüche

1. Innenkabine (172) eines Luftfahrzeugs (10), umfassend ein Ruhebereichssystem (100), das Ruhebereichssystem (100) umfassend:
ein Monument (102) innerhalb der Innenkabine (172); und
ein Bettmodul (104), das mit dem Monument (102) gekoppelt ist, wobei das Bettmodul (104) eine Endwand (120) und ein oder mehrere Betten (132) einschließt,
wobei die Endwand (120) des Bettmoduls (104) konfiguriert ist, um in Bezug auf das Monument (102) linear bewegt zu werden, um das Bettmodul (104) zwischen einer verstauten Position und einer ausgefahrenen Position relativ zu dem Monument (102) zu bewegen, und
wobei das Bettmodul (104) ferner einen ausfahrbaren Stift (141) umfasst, der konfiguriert ist, um das Bettmodul (104) in der ausgefahrenen Position zu verriegeln.

2. Innenkabine (172) nach Anspruch 1, wobei das Monument (102) eine interne Kammer (118) einschließt, wobei mindestens ein Abschnitt des Bettmoduls (104) innerhalb der internen Kammer (118) verstaut ist, wenn sich das Bettmodul (104) in der verstauten Position befindet, und wobei sich mindestens ein Abschnitt des Bettmoduls (104) aus der internen Kammer (118) erstreckt, wenn sich das Bettmodul (104) in der ausgefahrenen Position befindet.

3. Innenkabine (172) nach einem der Ansprüche 1 bis 2, wobei die Endwand (108, 120) innerhalb eines Durchgangs des Monuments (102) passt oder darin versenkt ist, wenn sich das Bettmodul (104) in der verstauten Position befindet..

4. Innenkabine (172) nach einem der vorstehenden Ansprüche, wobei die Endwand (108, 120) ein oder mehrere Riegel (124) umfasst und/oder wobei die Endwand (120) einen Griff umfasst, wobei vorzugsweise der Griff ein greifbares Element umfasst, das sich innerhalb eines offenen Hohlraums erstreckt, der in der Endwand ausgebildet ist, wobei der offene Hohlraum einen Endabschnitt und einen Seitenabschnitt umfasst.

5. Innenkabine (172) nach einem der Ansprüche 1 bis 4, wobei das Bettmodul (104) ferner eine oder mehrere Rollen (126) umfasst.

6. Innenkabine (172) nach einem der Ansprüche 1 bis 5, wobei das eine oder die mehreren Betten (132) konfiguriert sind, um sich zwischen einer verstauten Bettposition, wenn sich das Bettmodul (104) in der verstauten Position befindet, und einer ausgefahrenen Bettposition zu bewegen, wenn sich das Bettmodul (104) in der ausgefahrenen Position befindet.

7. Innenkabine (172) nach einem der Ansprüche 1 bis 6, wobei das eine oder die mehreren Betten (132) umfassen:
ein unteres Bett; und
ein oberes Bett.

8. Innenkabine (172) nach einem der Ansprüche 1 bis 7, wobei das eine oder die mehreren Betten (132) eine Vielzahl von Bettsegmenten umfassen, wobei die Vielzahl von Bettsegmenten konfiguriert ist, um sich relativ zueinander zu bewegen, wenn sich das Bettmodul (104) zwischen der verstauten Position und der ausgefahrenen Position bewegt.

9. Innenkabine (172) nach einem der Ansprüche 1 bis 8, ferner umfassend eine wechselseitige Aussparung in einem Boden der Innenkabine (172), wobei der ausfahrbare Stift (141) innerhalb der wechselseitigen Aussparung aufgenommen und gehalten werden kann.

10. Innenkabine (172) nach einem der Ansprüche 1 bis 9, ferner umfassend ein oder mehrere bewegbare Sichtschutzelemente (150).

11. Innenkabine (172) nach einem der Ansprüche 1 bis 10, wobei sich das eine oder die mehreren Betten (132) innerhalb eines oder mehrerer Bettabteile (200) befinden, die zwischen dem Monument (102) und dem Bettmodul (104) definiert sind, und wobei das eine oder die mehreren Bettabteile (200) einen oder mehrere Lautsprecher (202), ein Handgerät (203), eine Flächenleuchte (204), einen Rauchmelder (206), eine Serviceeinheit (208) oder eine Sauerstoffabgabeanordnung (210) umfassen.

12. Innenkabine (172) nach einem der Ansprüche 1 bis 11, wobei das Bettmodul (104) innerhalb einer Bordküche (170) der Innenkabine (172) in der Nähe einer Ausgangstür angeordnet werden kann.

13. Ruhebereichsverfahren für eine Innenkabine (172) eines Luftfahrzeugs nach einem der Ansprüche 1 bis 12, das Ruhebereichsverfahren umfassend:
Koppeln des Bettmoduls (104) mit dem Monument (102) innerhalb der Innenkabine (172) des Luftfahrzeugs, wobei das Bettmodul (104) das eine oder die mehreren Betten (132) einschließt;
Bewegen des Bettmoduls (104) zwischen der verstauten Position und der ausgefahrenen Position relativ zu dem Monument (102), wobei das Bewegen das lineare Bewegen der Endwand (120) des Bettmoduls (104) in Bezug auf das Monument umfasst; und
Verriegeln des Bettmoduls (104) in der ausgefahrenen Position mittels des ausfahrbaren Stifts (141).

14. Ruhebereichsverfahren nach Anspruch 13, wobei das Bewegen umfasst:
Verstauen mindestens eines Abschnitts des Bettmoduls (104) in einer internen Kammer (118) des Monuments (102), wenn sich das Bettmodul (104) in der verstauten Position befindet; und
Erstrecken des mindestens einen Abschnitts des Bettmoduls (104) aus der internen Kammer (118), wenn sich das Bettmodul (104) in der ausgefahrenen Position befindet.

15. Ruhebereichsverfahren nach einem der Ansprüche 13 oder 14, ferner umfassend das Bewegen des einen oder der mehreren Betten (132) zwischen einer verstauten Bettposition, wenn sich das Bettmodul (104) in der verstauten Position befindet, und einer ausgefahrenen Bettposition, wenn sich das Bettmodul (104) in der ausgefahrenen Position befindet.

## Revendications

1. Cabine interne (172) d'un aéronef (10), comprenant un système de zone de repos (100), le système de zone de repos (100) comprenant :
un monument (102) à l'intérieur de la cabine interne (172) ; et
un module de lit (104) couplé au monument (102), le module de lit (104) incluant une paroi d'extrémité (120) et un ou plusieurs lits (132),
dans laquelle la paroi d'extrémité (120) du module de lit (104) est configurée pour être déplacée linéairement par rapport au monument (102) afin de déplacer le module de lit (104) entre une position rangée et une position déployée par rapport au monument (102), et
dans laquelle le module de lit (104) comprend en outre une goupille déployable (141) configurée pour verrouiller le module de lit (104) dans la position déployée.

2. Cabine interne (172) selon la revendication 1, dans laquelle le monument (102) inclut une chambre intérieure (118), dans laquelle au moins une partie du module de lit (104) est rangée dans la chambre intérieure (118) lorsque le module de lit (104) est en position rangée, et dans laquelle l'au moins une partie du module de lit (104) s'étend hors de la chambre intérieure (118) lorsque le module de lit (104) est en position déployée.

3. Cabine interne (172) selon l'une des revendications 1-2, dans laquelle la paroi d'extrémité (108, 120) s'emboîte ou est creusée dans un passage du monument (102) lorsque le module de lit (104) est en position rangée..

4. Cabine interne (172) selon l'une des revendications précédentes, dans laquelle la paroi d'extrémité (108, 120) comprend une ou plusieurs serrures (124), et/ou dans laquelle la paroi d'extrémité (120) comprend une poignée, de préférence dans laquelle la poignée comprend un organe saisissable s'étendant à l'intérieur d'une cavité ouverte formée dans la paroi d'extrémité, dans laquelle la cavité ouverte comprend une partie d'extrémité et une partie latérale.

5. Cabine interne (172) selon l'une des revendications 1-4, dans laquelle le module de lit (104) comprend en outre un ou plusieurs galets (126).

6. Cabine interne (172) selon l'une des revendications 1-5, dans laquelle le ou les lits (132) sont configurés pour se déplacer entre une position rangée du lit lorsque le module de lit (104) est en position rangée et une position déployée du lit lorsque le module de lit (104) est en position déployée.

7. Cabine interne (172) selon l'une des revendications 1-6, dans laquelle le ou les lits (132) comprennent :
un lit inférieur ; et
un lit supérieur.

8. Cabine interne (172) selon l'une des revendications 1-7, dans laquelle le ou les lits (132) comprennent une pluralité de segments de lit, dans laquelle la pluralité de segments de lit est configurée pour se déplacer l'un par rapport à l'autre lorsque le module de lit (104) se déplace entre la position rangée et la position déployée.

9. Cabine interne (172) selon l'une des revendications 1-8, comprenant en outre un renfoncement réciproque dans un plancher de la cabine interne (172), dans laquelle la goupille déployable (141) peut être reçue et retenue dans le renfoncement réciproque.

10. Cabine interne (172) selon l'une des revendications 1-9, comprenant en outre un ou plusieurs écrans d'intimité mobiles (150).

11. Cabine interne (172) selon l'une des revendications 1-10, dans laquelle le ou les lits (132) se trouvent à l'intérieur d'un ou plusieurs compartiments de lit (200) définis entre le monument (102) et le module de lit (104), et dans laquelle le ou les compartiments de lit (200) comprennent un ou plusieurs parmi un haut-parleur (202), un combiné (203), une lumière de zone (204), un détecteur de fumée (206), une unité de service (208), ou un ensemble à oxygène tombant (210).

12. Cabine interne (172) selon l'une des revendications 1-11, dans laquelle le module de lit (104) peut être disposé dans une cuisine de bord (170) de la cabine interne (172) à proximité d'une porte de sortie.

13. Procédé de zone de repos pour une cabine interne (172) d'un aéronef selon l'une quelconque des revendications 1-12, le procédé de zone de repos comprenant :
le couplage du module de lit (104) au monument (102) à l'intérieur de la cabine interne (172) de l'aéronef, le module de lit (104) incluant un ou plusieurs lits (132) ;
le déplacement du module de lit (104) entre la position rangée et la position déployée par rapport au monument (102), dans lequel le déplacement comprenant le déplacement linéaire de la paroi d'extrémité (120) du module de lit (104) par rapport au monument ; et
le verrouillage du module de lit (104) en position déployée au moyen de la goupille déployable (141).

14. Procédé de zone de repos selon la revendication 13, dans lequel le déplacement comprend :
le rangement d'au moins une partie du module de lit (104) dans une chambre intérieure (118) du monument (102) lorsque le module de lit (104) est en position rangée ; et
l'extension d'au moins une partie du module de lit (104) hors de la chambre intérieure (118) lorsque le module de lit (104) est en position déployée.

15. Procédé de zone de repos selon l'une des revendications 13 ou 14, comprenant en outre le déplacement d'un ou plusieurs lits (132) entre une position rangée du lit lorsque le module de lit (104) est en position rangée et une position déployée du lit lorsque le module de lit (104) est en position déployée.
